# EUROPÄISCHE PATENTSCHRIFT

(11) **EP 1 122 877 B1**
(45) Veröffentlichungstag und Bekanntmachung des Hinweises auf die Patenterteilung: **27.06.2012**
(21) Anmeldenummer: 00125526.4
(22) Anmeldetag: 21.11.2000
(51) Int. Cl.: H02M 7/48

(54) **System zur Fernbedienung**
Remote control system
Système pour commande à distance

(30) Priorität: 13.12.1999 DE 19959877
(43) Veröffentlichungstag der Anmeldung: 08.08.2001
(73) Patentinhaber: SEW-EURODRIVE GmbH & Co. KG, 76646 Bruchsal (DE)
(72) Erfinder: Mack, Franz, 76275 Ettlingen (DE)

(56) Entgegenhaltungen:
- EP-A- 0 903 842
- EP-A- 0 920 116
- DE-U1- 9 400 955
- JP-A- 10 194 682

## Beschreibung

Die Erfindung betrifft ein System zur Fernbedienung.

Aus der Seite http://www.sew-eurodrive.de/german/frame_d.htm (Technische Dokumentation) sind Umrichter bekannt, die über einen Systembus verbindbar sind. Umrichter müssen zu Beginn in Betrieb genommen werden, insbesondere müssen die Parameter des Umrichters an die jeweilige Anwendung angepasst werden. Diese Inbetriebnahme von Umrichtern erfolgt durch einen Bedien-PC oder ein Handbediengerät, die jeweils mit dem Umrichter elektrisch verbunden werden. Auch während des Betriebs einer Anlage kann eine weitere Anpassung oder Optimierung von Parametern der Umrichter erforderlich sein. Beispielsweise muss ein einzelner Parameter bei laufender Anlage verändert werden. Von Nachteil ist dabei, dass eine elektrische Verbindung zwischen dem Bedien-PC und dem jeweiligen Umrichter eingerichtet werden muss, wenn keine andere Verbindung zur Datenübertragung besteht. Dies ist bei manchen Anlagen, insbesondere bei Anlagen großer räumlicher Ausdehnung, sehr aufwendig und kostspielig.

Aus der Betriebsanleitung 'Infrarot-Fernbedienung' der Firma 'Focus dynamics' ist eine Infrarot-Fernbedienung aus dem Februar 1999 bekannt. Von Nachteil ist dabei, dass nur eine Entfernung von weniger als 5 m zwischen Sender und Empfänger realisierbar ist. Außerdem ist eine Informationsübertragung nur bei Sichtkontakt möglich. Die Infrarot-Fernbedienung ist darüber hinaus nur für einen Umrichter einsetzbar.

Aus der DE 94 00 955 U1 ist ein Pumpenaggregat bekannt, bei dem einer elektronischen Steuerung von einer Sendeeinheit Stellsignale per Infrarot übertragbar sind.

Aus der JP 10 194 682 A ist ein fernsteuerbarer Umrichter bekannt.

Der Erfindung liegt daher die Aufgabe zugrunde, ein System zur Fernbedienung weiterzubilden unter Vermeidung der vorgenannten Nachteile. Insbesondere soll eine flexible kostengünstige Verbindung eingerichtet werden.

Erfindungsgemäß wird die Aufgabe bei einem System zur Fernbedienung nach den in Anspruch 1 angegebenen Merkmalen und bei dem Verfahren zum Betrieb nach den im Anspruch 8 angegebenen Merkmalen gelöst.

Wesentliche Merkmale der Erfindung sind, dass das System zur Fernbedienung, umfassend Sendeeinheit und Empfangseinheit,
wobei die Empfangseinheit und mindestens ein Umrichter derart gestaltet sind, dass sie miteinander elektrisch verbindbar sind,
und wobei Sendeeinheit und Empfangseinheit geeignet zum Übertragen von Informationen zwischen Sendeeinheit und Empfangseinheit mittels elektromagnetischer Wellen, insbesondere Funk,
wobei Umrichter und Empfangseinheit derart gestaltet sind, dass eine Inbetriebnahme oder Parametrierung des Umrichters oder der Umrichter ausführbar ist,
und wobei die Sendeeinheit Mittel zur Eingabe und Mittel zur Anzeige derart umfasst, dass eine Inbetriebnahme oder Parametrierung des Umrichters oder der Umrichter ausführbar Ist,
dadurch gekennzeichnet, dass

Empfangseinheit und Umrichter miteinander elektrisch lösbar verbindbar ist oder sind,
wobei die Wellenlänge größer als 1mm ist,
wobei der Umrichter mit weiteren Umrichtern elektrisch verbunden ist und die Umrichter derart gestaltet sind, dass eine Informationsübertragung von der Sendeeinheit über die Empfangseinheit und einen oder mehrere Umrichter zu einem weiteren Umrichter hin ausführbar ist.

Von Vorteil ist dabei, dass bei Einsatz der erfindungsgemäßen Wellenlängen ein großer Abstand zwischen Sende- und Empfangseinheit sogar im industriellen Umfeld möglich ist. Sogar bei unterbrochenem Sichtkontakt ist eine Informationsübertragung ausführbar.

In erfindungsgemäßer vorteilhafter Ausgestaltung ist die Empfangseinheit mit einem Befestigungsmittel lösbar mit dem Schaltschrank, insbesondere mit der Schaltschranktüre, verbunden. Das Befestigungsmittel ist beispielsweise ein Magnet oder eine Hutschiene.

Unter dem Wort Schaltschrank ist auch ein beliebiger Kasten in hoher Schutzart, beispielsweise IP54, hierbei und im Folgenden zu verstehen. Bei Anlagen werden häufig Umrichter in einen solchen Schaltschrank bzw. Kasten eingebaut.

Bei einer weiteren vorteilhaften Ausgestaltung ist der mit der Empfangseinheit verbundene Umrichter mit weiteren Umrichtern verbunden und eine Weiterleitung von Informationen vom erstgenannten Umrichter an weitere Umrichter möglich. Dazu weisen die Umrichter jeweils einstellbare oder programmierbare Adressen auf, wodurch sie derart ausbildbar sind, dass sie die für ihr jeweilige Adresse bestimmten Informationen herausfiltern können. Die Umrichter sind dabei jeweils mit Leitungen elektrisch verbunden. Es wird dann das aus dem Stand der Technik bekannte Systembusprotokoll oder ein Feldbusprotokoll zur Übertragung der Informationen verwendet.

Bei weiteren vorteilhaften Ausgestaltungen werden in der Anlage mehrere Empfangseinheiten eingesetzt. Durch den Einsatz von einstellbaren oder programmierbaren Adressen kann wiederum jede Empfangseinheit oder Umrichter die für ihn bestimmten Daten herausfiltern.

Wesentliches Merkmal der Erfindung ist der Einsatz des DECT-Standards, der bei Funktelefonen eingesetzt wird. Somit ist eine störsichere Übertragung auch im industriellen Umfeld durchführbar.

Weitere vorteilhafte Ausgestaltungen ergeben sich aus den Unteransprüchen.

### Bezugszeichenliste

- 1: Mittel zur Anzeige
- 2: Mittel zur Eingabe
- 3: Sendeeinheit
- 4: Empfangseinheit
- 5: Schaltschrank
- 6: Umrichter
- 7: Systembusverkabelung

Die Erfindung wird nun anhand von einer Abbildung näher erläutert:

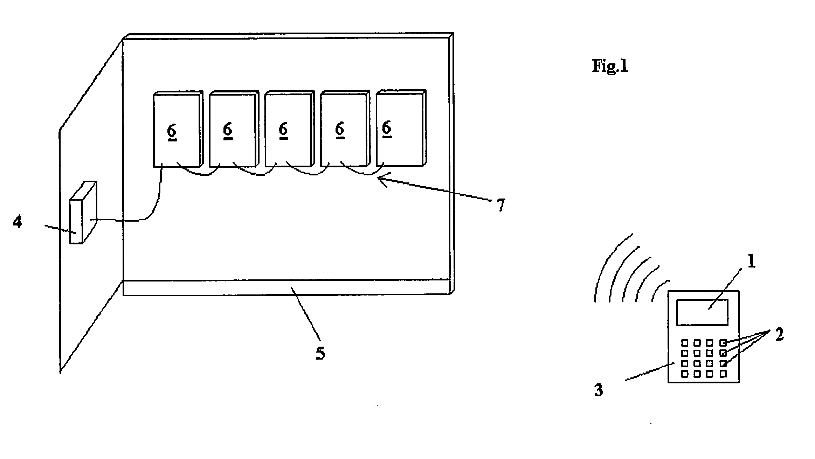

In der Figur 1 ist ein erfindungsgemäßes Ausführungsbeispiel gezeigt. Es weist eine Sendeeinheit 3 mit Mitteln zur Anzeige 1 und Mitteln zur Eingabe 2 auf. Zur Informationsübertragung werden Funkwellen verwendet. Die Übertragung erfolgt nach dem DECT-Standard und ist somit störsicher ausführbar. Die Empfangseinheit 4 befindet sich im Schaltschrank 5 und ist mit einem ersten Umrichter elektrisch verbunden. Dieser erste Umrichter 6 ist mit weiteren Umrichtern 6 über eine Systembusverkabelung 7 verbunden.

Die Empfangseinheit 4 kann nicht nur Daten empfangen sondern auch senden. Ebenso kann die Sendeeinheit 3 Daten auch empfangen. Dazu weisen beide Einheiten mindestens ein als Antenne wirksames Teil auf.

Jedem Umrichter wird eine Adresse zugeteilt, womit er aus dem Datenstrom diejenigen Daten herausfiltert, die für ihn bestimmt sind. Die von ihm gesendeten Daten werden mit der genannten Adresse kenntlich gemacht. Somit ist eine vollständige Parametrierung und/oder Inbetriebnahme jedes Umrichters ausführbar.

In weiteren erfindungsgemäßen Ausführungsbeispielen werden die Umrichter im industriellen Umfeld eingesetzt. Außerdem sind mehrere Empfangseinheiten mit jeweils verbundenen Umrichtern einsetzbar. Durch eine entsprechende Adressenvergabe sind zwischen der Sendeeinheit und dem jeweiligen Umrichter Daten austauschbar.

## Patentansprüche

1. System zur Fernbedienung, umfassend eine Sendeeinheit (3) und mindestens eine Empfangseinheit (4),
wobei die Empfangseinheit und mindestens ein Umrichter (6) derart gestaltet sind, dass sie miteinander elektrisch verbindbar sind,
und wobei Sendeeinheit und Empfangseinheit geeignet sind zum Übertragen von Informationen zwischen Sendeeinheit und Empfangseinheit mittels elektromagnetischer Wellen, insbesondere Funk,
wobei Umrichter und Empfangseinheit derart gestaltet sind, dass eine Inbetriebnahme oder Parametrierung des Umrichters oder der Umrichter ausführbar ist,
und wobei die Sendeeinheit Mittel zur Eingabe (2) und Mittel zur Anzeige (1) derart umfasst, dass eine Inbetriebnahme oder Parametrierung des Umrichters oder der Umrichter ausführbar ist,
**dadurch gekennzeichnet, dass**
Empfangseinheit und Umrichter miteinander elektrisch lösbar verbindbar ist oder sind, wobei die Wellenlänge größer als 1 mm ist,
wobei der Umrichter mit weiteren Umrichtern elektrisch verbunden ist und die Umrichter derart gestaltet sind, dass eine Informationsübertragung von der Sendeeinheit über die Empfangseinheit und einen oder mehrere Umrichter zu einem weiteren Umrichter hin ausführbar ist.

2. System zur Fernbedienung nach Anspruch 1,
**dadurch gekennzeichnet, dass**
Umrichter in einem Schaltschrank montiert sind und die Empfangseinheit derart ausgebildet ist, dass sie mit dem Schaltschrank lösbar verbindbar ist.

3. System zur Fernbedienung nach Anspruch 2,
**dadurch gekennzeichnet, dass**
Empfangseinheit mittels eines Befestigungsmittels lösbar mit dem Schaltschrank, insbesondere mit der Schaltschranktüre, verbindbar ist.

4. System zur Fernbedienung nach Anspruch 3,
**dadurch gekennzeichnet, dass**
das Befestigungsmittel ein Magnet ist.

5. System zur Fernbedienung nach Anspruch 3,
**dadurch gekennzeichnet, dass**
das Befestigungsmittel eine Hutschiene ist.

6. System zur Fernbedienung nach mindestens einem der vorangegangenen Ansprüche,
**dadurch gekennzeichnet, dass**
die Umrichter mittels Systembus oder Feldbus verbunden sind und derart gestaltet sind, dass - sie eine Adresse aufweisen und nur die für ihr jeweilige Adresse bestimmten Daten verwerten.

7. System zur Fernbedienung nach mindestens einem der vorangegangenen Ansprüche,
**dadurch gekennzeichnet, dass**
mehrere Empfangsgeräte jeweils mit Umrichtern elektrisch verbunden sind und derart gestaltet sind, dass sie jeweils eine Adresse aufweisen und die jeweils für ihre Adresse bestimmten Informationen an die jeweils verbundenen Umrichter weiterleiten.

8. Verfahren zum Betrieb eines Systems zur Fernbedienung nach mindestens einem der vorangegangenen Ansprüche,
**dadurch gekennzeichnet, dass**
die Übertragung der Informationen von der Sendeeinheit zur Empfangseinheit nach dem DECT-Standard für Funktelefone erfolgt.

## Claims

1. Remote control system, comprising a transmission unit (3) and at least one reception unit (4),
wherein the reception unit and at least one converter (6) are configured such that they are electrically connectable to one another,
and wherein transmission unit and reception unit are suitable for transmitting information between transmission unit and reception unit by means of electromagnetic waves, in particular radio,
wherein converter and reception unit are configured such that a start-up or parameterisation of the converter(s) can be carried out,
and wherein the transmission unit comprises input means (2) and display means (1) in such a way that a start-up or parameterisation of the converter(s) can be carried out,
**characterised in that**
reception unit and converter is or are electrically detachably connectable to one another,
wherein the wavelength is greater than 1 mm,
wherein the converter is electrically connected to further converters and the converters are configured such that information transmission from the transmission unit via the reception unit and one or more converter(s) to a further converter can be carried out.

2. Remote control system according to Claim 1,
**characterised in that**
converters are mounted in a switchgear cabinet and the reception unit is configured in such a way that it is detachably connectable to the switchgear cabinet.

3. Remote control system according to Claim 2,
**characterised in that**
reception unit is detachably connectable by means of a fastening means to the switchgear cabinet, in particular to the door of the switchgear cabinet.

4. Remote control system according to Claim 3,
**characterised in that**
the fastening means is a magnet.

5. Remote control system according to Claim 3,
**characterised in that**
the fastening means is a top hat rail.

6. Remote control system according to at least one of the preceding claims,
**characterised in that**
the converters are connected by means of system bus or field bus and are configured such that they have an - address and utilise only the data intended for their - respective address.

7. Remote control system according to at least one of the preceding claims,
**characterised in that**
a plurality of receivers are each electrically connected to converters and are configured such that they each have an address and pass on the information intended for their address to the respectively connected converters.

8. Method for operating a remote control system according to at least one of the preceding claims,
**characterised in that**
the transmission of the information from the transmission unit to the reception unit takes place according to the DECT standard for radio telephones.

## Revendications

1. Système de commande à distance comprenant une unité émettrice (3) et au moins une unité réceptrice (4),
l'unité réceptrice, et au moins un convertisseur (6), étant conçus de manière à pouvoir être raccordés électriquement l'un à l'autre,
et l'unité émettrice et l'unité réceptrice se prêtant à la transmission d'informations entre ladite unité émettrice et ladite unité réceptrice au moyen d'ondes électromagnétiques, en particulier par radio,
sachant que le convertisseur et l'unité réceptrice sont conçus pour permettre l'exécution d'une mise en fonction ou d'un paramétrage du ou des convertisseur(s),
et sachant que l'unité émettrice comporte des moyens d'entrée (2) et des moyens d'affichage (1), de manière à permettre l'exécution d'une mise en fonction ou d'un paramétrage dudit ou desdits convertisseur(s),
**caractérisé par le fait**
**qu'**un raccordement électrique mutuel peut être établi, de manière dissociable, entre l'unité réceptrice et le(s) convertisseur(s),
la longueur d'ondes étant supérieure à 1 mm,
le convertisseur étant connecté électriquement à d'autres convertisseurs, et les convertisseurs étant conçus de manière à permettre l'exécution d'une transmission d'informations à un convertisseur supplémentaire, à partir de l'unité émettrice, par l'intermédiaire de l'unité réceptrice et d'un ou plusieurs convertisseur(s).

2. Système de commande à distance selon la revendication 1,
**caractérisé par le fait que**
des convertisseurs sont montés dans une armoire de commutation, et l'unité réceptrice est réalisée de façon à pouvoir être connectée à ladite armoire de commutation, de manière dissociable.

3. Système de commande à distance selon la revendication 2,
**caractérisé par le fait que**
l'unité réceptrice peut être connectée à l'armoire de commutation de manière dissociable, en particulier à la porte de ladite armoire de commutation, à l'aide d'un moyen de fixation.

4. Système de commande à distance selon la revendication 3,
**caractérisé par le fait que**
le moyen de fixation est un aimant.

5. Système de commande à distance selon la revendication 3,
**caractérisé par le fait que**
le moyen de fixation est un rail DIN.

6. Système de commande à distance selon au moins l'une des revendications précédentes,
**caractérisé par le fait que**
les convertisseurs sont raccordés au moyen d'un bus système ou d'un bus de terrain, et sont conçus de manière à présenter une adresse et à exploiter uniquement les données destinées à leur adresse respective.

7. Système de commande à distance selon au moins l'une des revendications précédentes,
**caractérisé par le fait que**
plusieurs appareils récepteurs sont raccordés électriquement à des convertisseurs respectifs, et sont conçus de manière à présenter une adresse et à transmettre, aux convertisseurs respectivement connectés, les informations respectivement destinées à leur adresse.

8. Procédé d'actionnement d'un système de commande à distance selon au moins l'une des revendications précédentes,
**caractérisé par le fait que**
la transmission des informations, de l'unité émettrice à l'unité réceptrice, s'opère conformément à la norme DECT pour téléphones mobiles.
